# EUROPEAN PATENT APPLICATION

(11) **EP 3 236 660 A1**
(43) Date of publication of application: **25.10.2017**
(21) Application number: 16189259.1
(22) Date of filing: 16.09.2016
(51) Int. Cl.: H04N 21/2365, H04N 5/445, H04N 5/45, H04N 21/431, H04N 21/438, H04N 21/462

(54) **VIDEO PROCESSING METHOD AND DEVICE**

(30) Priority: 22.04.2016 CN 201610258583
(71) Applicant: Beijing Xiaomi Mobile Software Co., Ltd., Beijing 100085 (CN)
(72) Inventor: LI, Zhigang, Beijing, 100085 (CN); SUN, Heng, Beijing, 100085 (CN); ZHANG, Yang, Beijing, 100085 (CN)
(74) Representative: dompatent von Kreisler Selting Werner - Partnerschaft von Patent- und Rechtsanwälten mbB

(57) **Abstract**

The present disclosure relates to a video processing method and a video processing device. The video processing method includes: receiving (S101, S301) multiple channels of video image individually sent from multiple mobile terminals; displaying (S102) the multiple channels of video image; acquiring (S103, S304) a selection instruction input by a user, the selection instruction carrying an identifier of a target video image, the target video image including at least one of the multiple channels of video image; and transmitting (S104, S305) the target video image to another terminal. According to embodiments of the disclosure, any desirable video image can be selected from the multiple channels of video image being displayed as the target video image for live broadcasting. Thus, abundant video content is achieved and user experience can be improved significantly.

## Description

### TECHNICAL FIELD

The present disclosure relates to the field of communication technology, and more particularly, to a video processing method and a video processing device.

### BACKGROUND

Live video broadcasting is generally implemented by means of internet and streaming media technology. Live video has gradually become a mainstream way of expression on internet due to its integration with abundant elements such as image, text, and sound and excellent effect of audio and video presentation.

Live video broadcasting via mobile phone refers to sharing of onsite events to audiences via a smart phone at any time anywhere through real-time shooting of the smart phone. Until now, however, the live video broadcasting via mobile phone is monotonous in content and, accordingly, causes poor user experience.

### SUMMARY

Accordingly, the present disclosure provides a video processing method and a device thereof in accordance with claims which follow.

According to a first aspect of embodiments of the present disclosure, there is provided a video processing method, including:
receiving multiple channels of video image individually sent from multiple mobile terminals;
displaying the multiple channels of video image;
acquiring a selection instruction input by a user, the selection instruction carrying an identifier of a target video image, the target video image including at least one of the multiple channels of video image; and
transmitting the target video image to another terminal.

In an embodiment, prior to the displaying the multiple channels of video image, the method further includes:
collecting local video image; and
the displaying the multiple channels of video image includes:
displaying the local video image and the multiple channels of video image.

In an embodiment, when the target video image includes two or more of the multiple channels of video image, the transmitting the target video image to another terminal includes:
performing superposing or splicing process on the two or more of the multiple channels of video image in the target video image and transmitting obtained video image to the another terminal.

In an embodiment, the method further includes:
acquiring a switching instruction input by the user; and
transmitting switched target video image to the another terminal.

In an embodiment, any of the selection instruction and the switching instruction is a voice control instruction.

In an embodiment, the method further includes:
receiving multiple channels of audio information individually sent from the multiple mobile terminals;
smoothing the multiple channels of audio information to obtain target audio information; and
transmitting the target audio information to the another terminal.

According to a second aspect of embodiments of the present disclosure, there is provided a video processing device, including:
a first receiving module configured to receive multiple channels of video image individually sent from multiple mobile terminals;
a displaying module configured to display the multiple channels of video image received by the first receiving module;
an acquiring module configured to acquire a selection instruction input by a user, the selection instruction carrying an identifier of a target video image, the target video image including at least one of the multiple channels of video image displayed by the displaying module; and
a first transmitting module configured to transmit the target video image to another terminal.

In an embodiment, the device further includes:
a collecting module configured to collect local video image before displaying the multiple channels of video image at the displaying module; and
wherein the displaying module is configured to display the local video image and the multiple channels of video image.

In an embodiment, when the target video image includes two or more of the multiple channels of video image, the first transmitting module is configured to:
perform superposing or splicing process on the two or more of the multiple channels of video image in the target video image and transmit obtained video image to the another terminal.

In an embodiment, the device further includes:
an acquiring and transmitting module configured to acquire a switching instruction input by the user and transmit switched target video image to the another terminal.

In an embodiment, any of the selection instruction and the switching instruction is a voice control instruction.

In an embodiment, the device further includes:
a second receiving module configured to receive multiple channels of audio information individually sent from the multiple mobile terminals;
a processing module configured to smooth the multiple channels of audio information received by the second receiving module to obtain target audio information; and
a second transmitting module configured to transmit the target audio information obtained by the processing module to the another terminal.

According to a third aspect of embodiments of the present disclosure, there is provided a video processing apparatus, including:
a processor; and
a memory configured to store instructions executable by the processor;
wherein, the processor is configured to perform:
receiving multiple channels of video image individually sent from multiple mobile terminals;
displaying the multiple channels of video image;
acquiring a selection instruction input by a user, the selection instruction carrying an identifier of a target video image, the target video image including at least one of the multiple channels of video image; and
transmitting the target video image to another terminal.

According to a fourth aspect of the embodiment of the present disclosure, there is provided a program product having stored therein instructions that, when executed by one or more processors of a mobile terminal, causes the mobile terminal to perform:
receiving multiple channels of video image individually sent from multiple mobile terminals;
displaying the multiple channels of video image;
acquiring a selection instruction input by a user, the selection instruction carrying an identifier of a target video image, the target video image comprising at least one of the multiple channels of video image; and
transmitting the target video image to another terminal.

According to a fifth aspect of the embodiment of the present disclosure, there is provided a computer program which, when being executed on a processor of a mobile terminal, performs any one of the above methods.

The technical solution provided by the embodiments of the present disclosure may achieve, at least in part, the following beneficial effects.

As the multiple channels of video image sent from the multiple mobile terminals are displayed, and the target video image is transmitted to other terminals when a selection instruction directing at the target video image input by the user is acquired, any desirable video image can be selected from the multiple channels of video image as the target video image for live broadcasting. Thus, abundant video content is achieved and user experience can be improved significantly.

As the multiple channels of video image respectively sent from the multiple mobile terminals are received, the local video image is also collected, and both the local video image and the multiple channels of video image are displayed, such that any desirable video image can be selected, from the local video image and the multiple channels of video image, as the target video image for live broadcasting. Thus, live broadcasting video content is obtained abundantly and user experience can be improved.

As the superposing or splicing process is performed on the multiple channels of video image in the target video image, the live video broadcasting can be improved on its content, clarity or presentation and, thus, user experience can be promoted significantly.

When the switching instruction directing at a target video image input by the user is acquired, switched target video image is transmitted to other terminals, such that the target video image can be switched and, thus, user experience can be improved significantly.

As both the selection instruction and switching instruction directing at the target video image may be implemented as a voice control instruction, it is convenient for the user to select or switch the target video image.

The target audio information can be obtained clearly by smoothing the multiple channels of audio information and, then, transmitted to other terminals, such that user experience of live video broadcasting can be improved.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flowchart illustrating a video processing method according to an exemplary embodiment.
FIG. 2 is a schematic diagram illustrating a scenario of a video processing method according to an exemplary embodiment.
FIG. 3 is a flowchart illustrating a video processing method according to another exemplary embodiment.
FIG. 4 is a flowchart illustrating a video processing method according to another exemplary embodiment.
FIG. 5 is a flowchart illustrating a video processing method according to another exemplary embodiment.
FIG. 6A is a flowchart illustrating a process on multiple channels of video image in the target video image according to an exemplary embodiment.
FIG. 6B is a schematic diagram illustrating an interface of a splicing process on multiple channels of video image according to an exemplary embodiment.
FIG. 6C is a schematic diagram illustrating an interface of a superposing process on multiple channels of video image according to an exemplary embodiment.
FIG. 7 is a block diagram illustrating a video processing device according to an exemplary embodiment.
FIG. 8 is a block diagram illustrating a video processing device according to another exemplary embodiment.
FIG. 9 is a block diagram illustrating a video processing device according to another exemplary embodiment.
FIG. 10 is a block diagram illustrating a video processing device according to another exemplary embodiment.
FIG. 11 is a block diagram illustrating an apparatus applicable for processing video according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

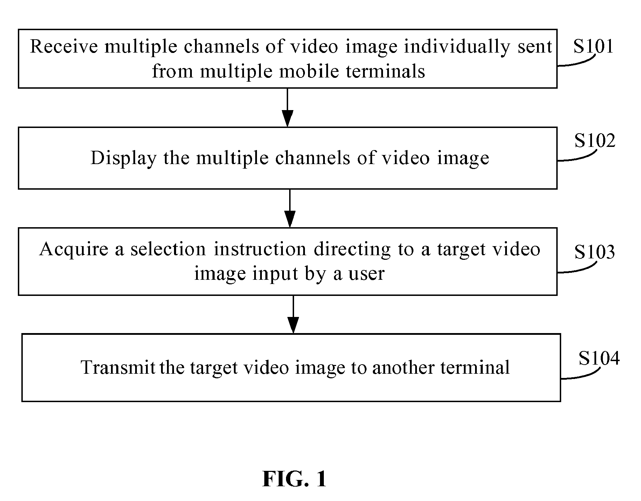

FIG. 1 is a flowchart illustrating a video processing method according to an exemplary embodiment. The video processing method is applicable in a mobile terminal including such as a mobile phone but not limited thereto. As shown in FIG. 1, the video processing method includes following steps S101-S104.

In step S101, multiple channels of video image individually sent from multiple mobile terminals are received.

In an embodiment, one of the multiple mobile terminals serves as the live broadcasting mobile terminal which is able to share and receive the multiple channels of video image from remaining mobile terminals through NFC (Near Field Communication) technology or WiFi (Wireless Fidelity).

Herein, the mobile terminal may be a mobile phone, and the multiple channels of video image from mobile terminals may include any of video image regarding different scenes at the same time, video image regarding different perspectives at the same time, and video image regarding different scenes and different perspectives at the same time, but are not limited thereto.

In step S102, the multiple channels of video image are displayed.

The live broadcasting mobile terminal can display the multiple channels of video image after receiving the same.

In step S103, a selection instruction directing to a target video image input by a user is acquired.

The selection instruction may carry therein an identifier of the target video image. Herein, the target video image may include at least one of the multiple channels of video image. In other words, a host can select at least one channel of video image for live broadcasting from the multiple channels of video image.

In step S104, the target video image is transmitted to another terminal.

In the embodiment, after receiving the selection instruction input by the user, the live broadcasting mobile terminal can transmit the target video image to other terminals so as to enable live video broadcasting.

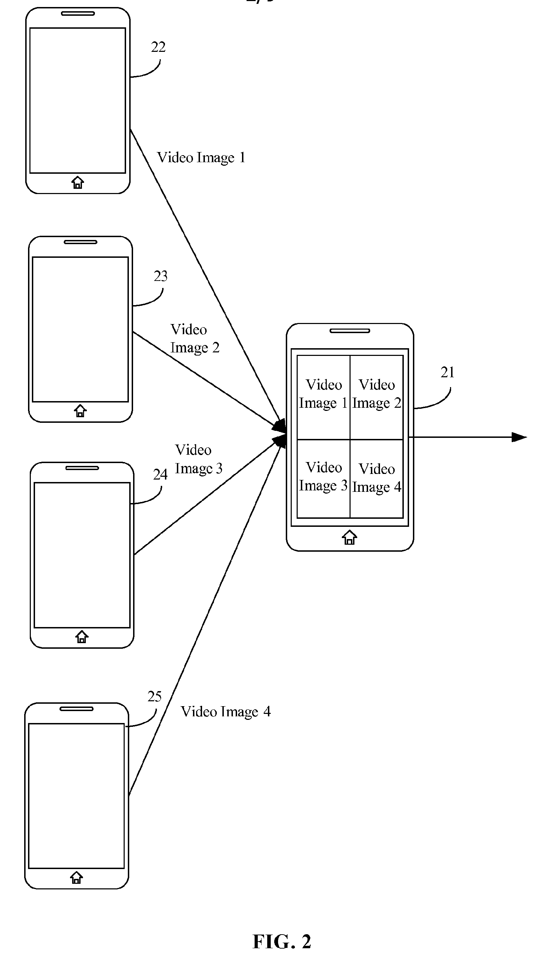

Illustrative description of the disclosure will be now given with reference to FIG. 2. As shown in FIG. 2, a live broadcasting mobile phone 21 receives four channels of video image from mobile phones 22, 23, 24 and 25 and displays the four channels of video image. Assuming that a host desires to broadcast the video image from the mobile phone 22, when an identifier of the video image from the mobile phone 22 is acquired, the mobile phone 21 can transmit the video image from the mobile phone 22 to another terminal via a server, so as to enable live video broadcasting. According to the embodiment, as can be seen from above, abundant video content is obtained by receiving the multiple channels of video image from the multiple mobile terminals, and any desirable video image can be selected therefrom for live broadcasting, thus user experience can be improved significantly.

According to the embodiment of the video processing method described above, the multiple channels of video image sent from the multiple mobile terminals are displayed, and the target video image is transmitted to another terminal when a selection instruction directing at the target video image input by the user is acquired, such that any desirable video image can be selected from the multiple channels of video image as the target video image for live broadcasting. Thus, abundant video content is achieved and user experience can be improved significantly.

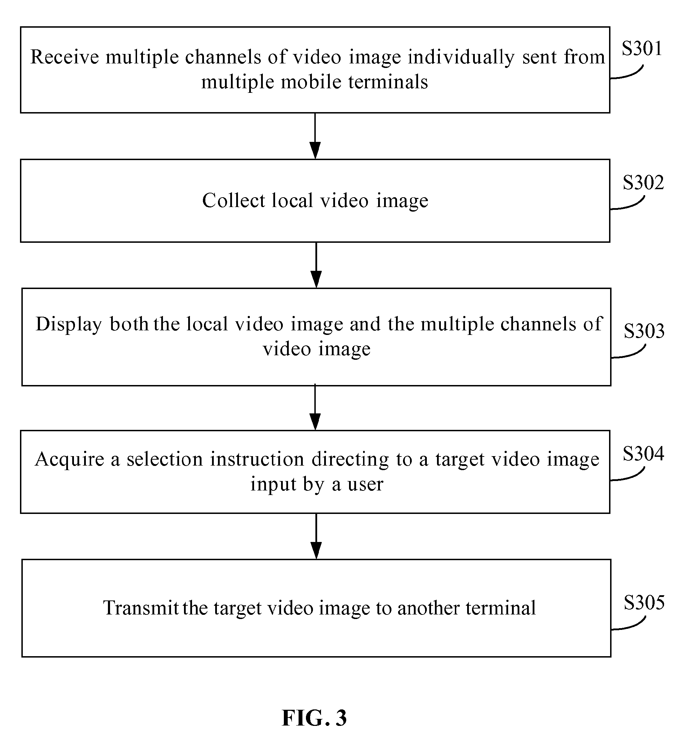

FIG. 3 is a flowchart illustrating a video processing method according to another exemplary embodiment. As shown in FIG. 3, the method includes following steps.

In step S301, multiple channels of video image individually sent from multiple mobile terminals are received.

In step S302, local video image is collected.

In an embodiment, as the multiple channels of video image individually sent from multiple mobile terminals are received, the local video image can be also collected.

In step S303, the local video image and the multiple channels of video image are displayed.

In step S304, a selection instruction directing to a target video image input by a user is acquired.

Herein, the selection instruction may be a voice control instruction. Moreover, the selection instruction may carry therein an identifier of the target video image. The target video image may include at least one of the multiple channels of video image. In other words, a host can select at least one channel of video image for live broadcasting from the multiple channels of video image.

In step S305, the target video image is transmitted to another terminal.

When the target video image includes two or more of the multiple channels of video image, a superposing or splicing process may be performed on the two or more of the multiple channels of video image in the target video image, and such processed video image is transmitted to other terminals.

According to the embodiment of the video processing method described above, as the multiple channels of video image respectively sent from the multiple mobile terminals are received, the local video image is also collected, and both the local video image and the multiple channels of video image are displayed, such that any desirable video image can be selected, from the local video image and the multiple channels of video image, as the target video image for live broadcasting. Thus, live broadcasting video content is obtained abundantly and user experience can be improved.

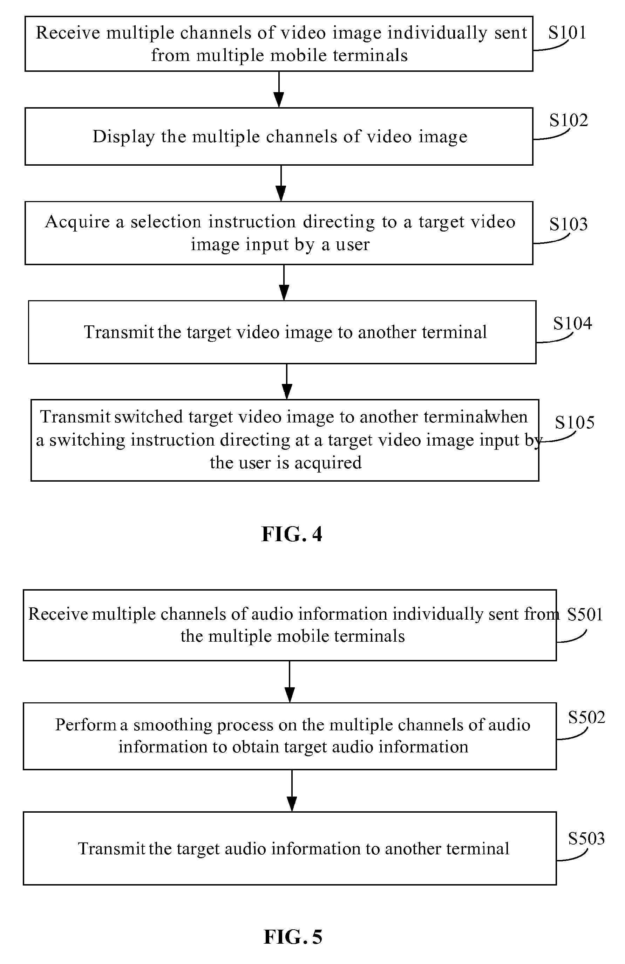

FIG. 4 is a flowchart illustrating a video processing method according to another exemplary embodiment. As shown in FIG. 4, the method includes following steps after step S104.

In step S105, when a switching instruction directing at a target video image input by the user is acquired, switched target video image is transmitted to another terminal.

Herein, the switching instruction may be a voice control instruction.

Taking the four channels of video image shown in FIG. 2 for an example, assuming that the video image for current live broadcasting is video image 1, the user desires to broadcast video image 3. When a voice switching instruction indicative of "switching to video image 3" is issued by the host, it can be acquired by the live broadcasting mobile phone 21 which can switch to transmit the video image 3 to other terminals for live broadcasting.

According to the embodiment of the video processing method described above, when the switching instruction directing at a target video image input by the user is acquired, switched target video image is transmitted to other terminals, such that the target video image can be switched and, thus, user experience can be improved significantly.

FIG. 5 is a flowchart illustrating a video processing method according to another exemplary embodiment. As shown in FIG. 5, the method includes following steps based on the embodiment shown in FIG. 4.

In step S501, multiple channels of audio information individually sent from the multiple mobile terminals are received.

In an embodiment, the multiple channels of audio information individually sent from the multiple mobile terminals are received in addition to the multiple channels of video image individually sent from the multiple mobile terminals.

In step S502, a smoothing process is performed on the multiple channels of audio information to obtain target audio information.

In an embodiment, the smoothing process is performed on the multiple channels of audio information to eliminate noise therein, such that clarity of target audio information can be improved.

In step S503, the target audio information is transmitted to another terminal.

According to the embodiment described above, the target audio information is obtained clearly by smoothing the multiple channels of audio information and, then, transmitted to other terminals, such that user experience of live video broadcasting can be improved.

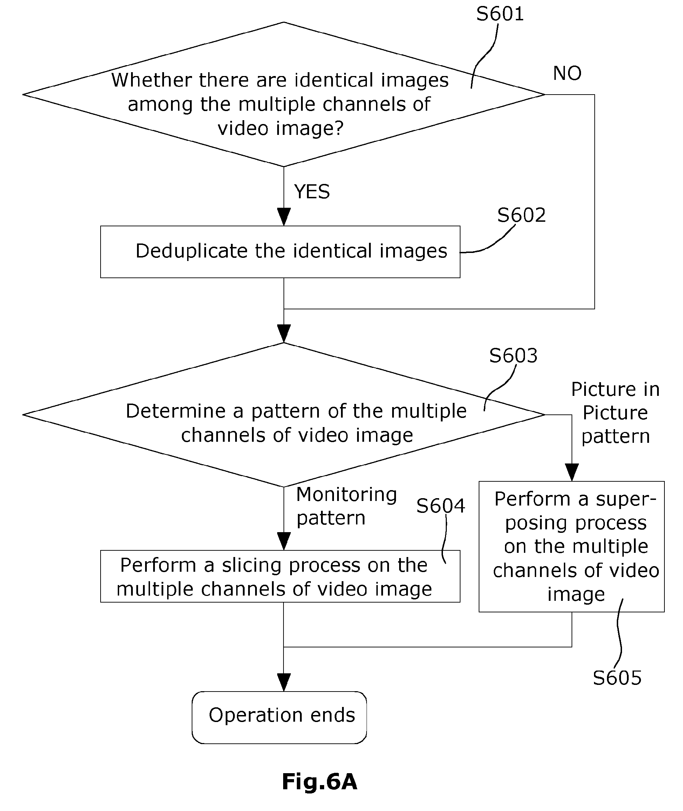

FIG. 6A is a flowchart illustrating a process on multiple channels of video image in the target video image according to an exemplary embodiment. As shown in FIG. 6A, the process includes following steps.

In step S601, it is detected whether there are identical images among the multiple channels of video image, if yes, step S602 is executed and, if no, step S603 is executed.

In an embodiment, there may be identical images between two channels of video image when perspectives of two mobile phones for collecting the video image are identical to each other.

In step S602, the identical images are deduplicated.

In step S603, a pattern of the multiple channels of video image is determined. When the multiple channels of video image are in a monitoring pattern, step S604 is executed. When the multiple channels of video image are in a PIP (Picture in Picture) pattern, step S605 is executed.

In an embodiment, the pattern of the multiple channels of video image can be determined based on an event type corresponding to the video image, which may be identified by processing content of the multiple channels of video image through machine learning algorithm or neural network algorithm.

For example, a current event may be identified as a competition event or a celebration event based on the content of the multiple channels of video image. If it is a competition event, the multiple channels of video image can be determined as being in the PIP pattern. If it is a celebration event, the multiple channels of video image can be determined as being in the monitoring pattern.

Accordingly, a simple way of implementation and high accuracy can be achieved by determining the pattern of the multiple channels of video image based on the event type.

In step S604, a splicing process is performed on the multiple channels of video image and, then, operation ends.

In an embodiment, the splicing process may be performed on the multiple channels of video image when it is determined the multiple channels of video image are in the monitoring pattern.

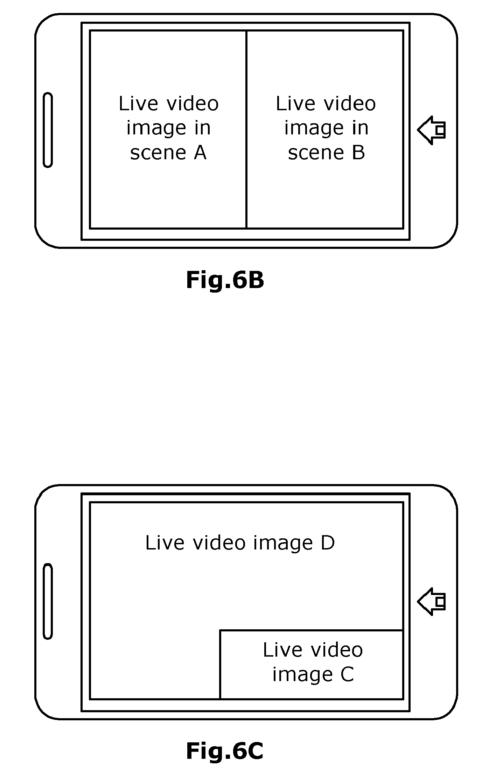

For example, when there is a celebration event, the multiple channels of video image generated in different scenes at the same time are spliced into one image. As shown in FIG. 6B, two channels of video image generated in scene A and scene B are spliced into one image, such that live broadcasting of the celebration event can be enabled.

In step S605, a superposing process is performed on the multiple channels of video image and, then, operation ends.

In an embodiment, the superposing process may be performed on the multiple channels of video image when it is determined the multiple channels of video image are in the PIP pattern.

For example, when there is a competition event, one channel of video image may be superposed onto another channel to obtain the PIP channel. As shown in FIG. 6C, video image C is superposed onto video image D, such that live broadcasting of the competition event can be enabled.

According to the embodiment of the video processing method described above, either the splicing process or the superposing process is performed on the multiple channels of video image depending on the pattern of the multiple channels of video image. Thus, the live broadcasting can be implemented in a flexible way with high pertinence and great effect.

There are also provided embodiments of video processing device by the disclosure corresponding to the embodiments of video processing method described above.

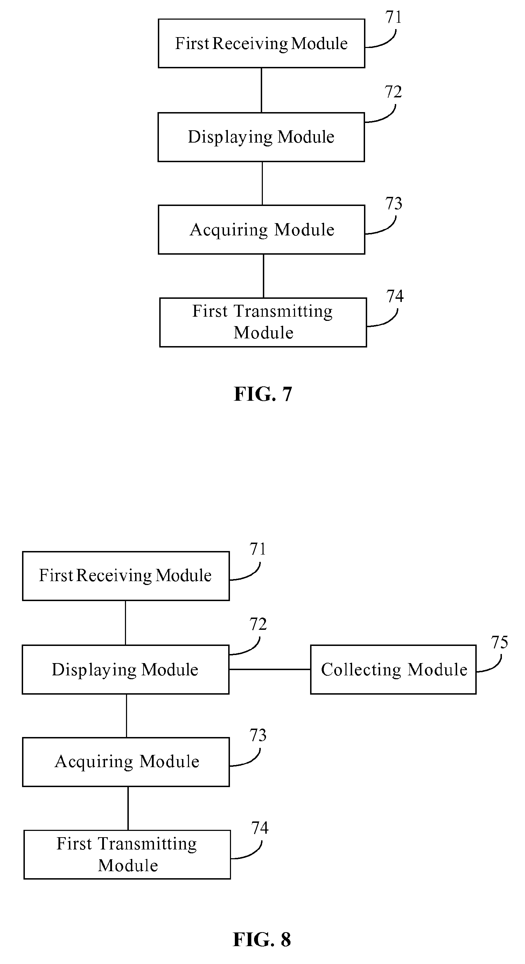

FIG. 7 is a block diagram illustrating a video processing device according to an exemplary embodiment. As shown in FIG. 7, the video processing device includes a first receiving module 71, a displaying module 72, an acquiring module 73 and a first transmitting module 74.

The first receiving module 71 is configured to receive multiple channels of video image individually sent from multiple mobile terminals.

In an embodiment, one of the multiple mobile terminals serves as the live broadcasting mobile terminal which is able to share and receive the multiple channels of video image from remaining mobile terminals through NFC (Near Field Communication) technology or WiFi (Wireless Fidelity).

Herein, the multiple channels of video image from mobile terminals may include any of video image regarding different scenes at the same time, video image regarding different perspectives at the same time, and video image regarding different scenes and different perspectives at the same time, but are not limited thereto.

The displaying module 72 is configured to display the multiple channels of video image received by the first receiving module 71.

The acquiring module 73 is configured to acquire a selection instruction directing to a target video image input by a user, the selection instruction carrying therein an identifier of the target video image which includes at least one of the multiple channels of video image displayed by the displaying module 72.

The first transmitting module 74 is configured to transmit the target video image to another terminal.

In the embodiment, after the selection instruction input by the user is received, the target video image can be transmitted by the first transmitting module 74 to other terminals so as to enable live video broadcasting.

In an embodiment, when the target video image includes several channels of video image, the first transmitting module 74 is configured to perform superposing or splicing process on the two or more of the multiple channels of video image in the target video image and, then, transmit obtained video image to the another terminal.

As the device shown in FIG. 7 is used to implement steps of the method shown in FIG. 1, the description of FIG. 1 may be applied to FIG. 7, thus no detailed illustration will be made herein.

According to the embodiment of the video processing device described above, the multiple channels of video image sent from the multiple mobile terminals are displayed, and the target video image is transmitted to another terminal when a selection instruction directing at the target video image input by the user is acquired, such that any desirable video image can be selected from the multiple channels of video image as the target video image for live broadcasting. Thus, abundant video content is achieved and user experience can be improved significantly.

FIG. 8 is a block diagram illustrating a video processing device according to another exemplary embodiment. As shown in FIG. 8, the device further includes a collecting module 75 based on the embodiment shown in FIG. 7.

The collecting module 75 is configured to collect local video image before displaying the multiple channels of video image at the displaying module 72.

In the embodiment, as the multiple channels of video image individually sent from multiple mobile terminals are received, the local video image can be also collected.

Herein, the displaying module 72 may be configured to display the local video image and the multiple channels of video image.

As the device shown in FIG. 8 is used to implement steps of the method shown in FIG. 3, the description of FIG. 3 may be applied to FIG. 8, thus no detailed illustration will be made herein.

According to the embodiment of the video processing device described above, as the multiple channels of video image respectively sent from the multiple mobile terminals are received, the local video image is also collected, and both the local video image and the multiple channels of video image are displayed, such that any desirable video image can be selected, from the local video image and the multiple channels of video image, as the target video image for live broadcasting. Thus, live broadcasting video content is obtained abundantly and user experience can be improved.

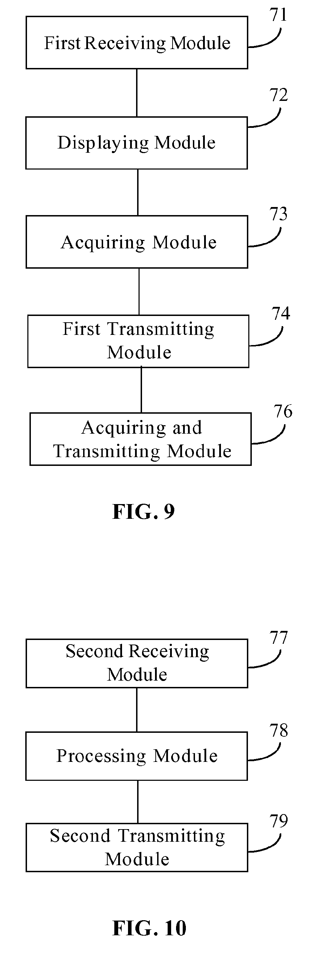

FIG. 9 is a block diagram illustrating a video processing device according to another exemplary embodiment. As shown in FIG. 9, the device further includes an acquiring and transmitting module 76 based on the embodiment shown in FIG. 7.

The acquiring and transmitting module 76 is configured to acquire a switching instruction input by the user and transmit switched target video image to another terminal.

Herein, the switching instruction may be a voice control instruction.

Taking the four channels of video image shown in FIG. 2 for an example, assuming that the video image for current live broadcasting is video image 1, the user desires to broadcast video image 3. When a voice switching instruction indicative of "switching to video image 3" is issued by the host, it can be acquired by the live broadcasting mobile phone 21 which can switch to transmit the video image 3 to other terminals for live broadcasting.

As the device shown in FIG. 9 is used to implement steps of the method shown in FIG. 4, involved description may be the same with each other, thus no detailed illustration will be made herein.

According to the embodiment of the video processing device described above, when the switching instruction directing at a target video image input by the user is acquired, switched target video image is transmitted to other terminals, such that the target video image can be switched and, thus, user experience can be improved significantly.

FIG. 10 is a block diagram illustrating a video processing device according to another exemplary embodiment. As shown in FIG. 10, the device further includes a second receiving module 77, a processing module 78 and a second transmitting module 79 based on the embodiment shown in FIG. 9.

The second receiving module 77 is configured to receive multiple channels of audio information individually sent from the multiple mobile terminals.

In an embodiment, the multiple channels of audio information individually sent from the multiple mobile terminals are received in addition to the multiple channels of video image individually sent from the multiple mobile terminals.

The processing module 78 is configured to perform a smoothing process on the multiple channels of audio information received by the second receiving module 77 to obtain target audio information.

In an embodiment, the smoothing process is performed on the multiple channels of audio information to eliminate noise therein, such that clarity of target audio information can be improved.

The second transmitting module 79 is configured to transmit the target audio information obtained by the processing module 78 to another terminal.

As the device shown in FIG. 10 is used to implement steps of the method shown in FIG. 5, the description of FIG. 5 may be applied to FIG. 10, thus no detailed illustration will be made herein.

According to the embodiment described above, the target audio information is obtained clearly by smoothing the multiple channels of audio information and, then, transmitted to other terminals, such that user experience of live video broadcasting can be improved.

With regard to the devices in the foregoing embodiments, detailed description of specific modes for conducting operation of modules has been made in the embodiments related to the method and, thus, no detailed illustration will be made herein.

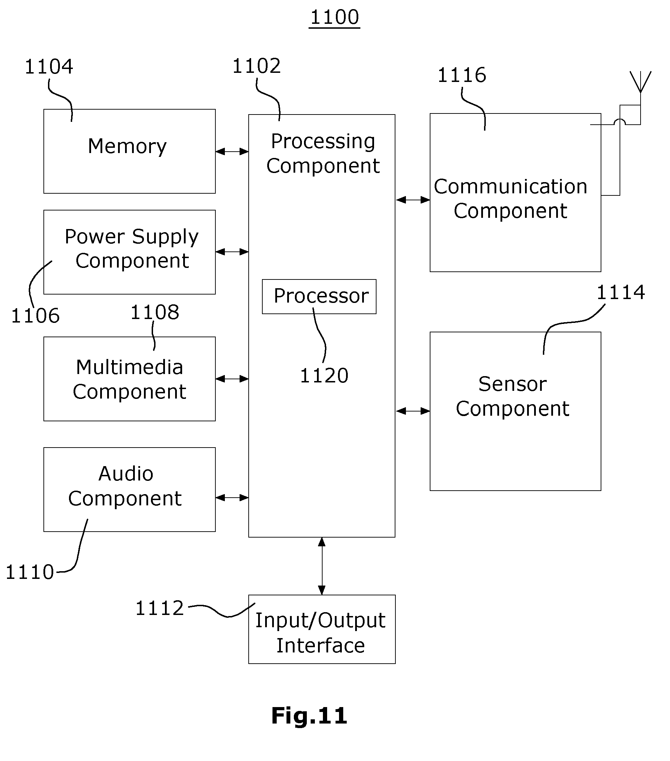

FIG. 11 is a block diagram illustrating an apparatus applicable for processing video according to an exemplary embodiment. For example, the apparatus 1100 may be a mobile telephone, a computer, a digital broadcasting terminal, a message transceiver, a game control center, a tablet device, a medical device, a fitness device, a personal digital assistant and so on.

Referring to FIG. 11, the apparatus 1100 may include one or more components as below: a processing component 1102, a memory 1104, a power supply component 1106, a multimedia component 1108, an audio component 1110, an input/output (I/O) interface 1112, a sensor component 1114 and a communication component 1116.

The processing component 1102 usually controls the overall operation of the apparatus 1100 such as operations relating to display, making call, data communication, taking photos and recording. The processing component 1102 may include one or more processors 1120 to execute instructions to finish all or part steps of the above method. Besides, the processing component 1102 may include one or more modules for facilitating the interaction between the processing component 1102 and other components. For example, the processing component 1102 may include a multimedia module to facilitate the interaction between the multimedia component 1108 and the processing component 1102.

The memory 1104 is configured to store various types of data to support the operation at the apparatus 1100. Examples of the data include any instructions for performing applications or methods at the apparatus 1100, contact data, phone book data, a message, a picture and a video and so on. The memory 1104 may be any types of volatile or non-volatile storage devices or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or compact disk.

The power supply component 1106 provides power for components of the apparatus 1100. The power supply component 1106 may include a power management system, one or more power supplies, and other related components for generating, managing and distributing power for the apparatus 1100.

The multimedia component 1108 includes a screen which provides an output interface between the apparatus 1100 and the user. In some embodiments, the screen may include a liquid crystal display (LCD) and a touch panel (TP). If the screen includes a touch panel, the screen may be realized to be a touch screen to receive an input signal from the user. The touch panel includes one or more touch sensors to sense touch, slide and gestures on the touch panel. The touch sensor may not only sense the touch or slide boundary, but also detect the duration time and pressure of the touch or slide operation. In some embodiments, the multimedia component 1108 includes a front-facing camera and/or a rear-facing camera. When the apparatus 1100 is in an operation mode, such as a photo mode or video mode, the front-facing camera and/or the rear-facing camera may receive external multimedia data. Each front-facing camera and rear-facing camera may be a fixed optical lens system or have the focal length and optical zoom ability.

The audio component 1110 is configured to output and/or input an audio signal. For example, the audio component 1110 includes a microphone (MIC); when the apparatus 1100 is in an operation mode such as a call mode, a record mode and a speech recognition mode, the microphone is configured to receive an external audio signal. The received audio signal may be further stored in the memory 1104 or sent out by the communication component 1116. In some embodiments, the audio component 1110 may further include a loudspeaker for outputting the audio signal.

The I/O interface 1112 may provide interface between the processing component 1102 and a peripheral interface module. The peripheral interface module may be a keyboard, a click wheel, a button and so on. These buttons include but are not limited to: a homepage button, a volume button, a start button and a lock button.

The sensor component 1114 includes one or more sensors for evaluating states of different aspects of the apparatus 1100. For example, the sensor component 1114 may detect the on/off state of the apparatus 1100, relative locations of components, for example, the components are the displayer and keypads of the apparatus 1100. The sensor component 1114 may further sense the position change of a component of the apparatus 1100 or the position change of the apparatus 1100, whether the touch exists between the user and the apparatus 1100, the direction or acceleration/deceleration of the apparatus 1100, and temperature change of the apparatus 1100. The sensor component 1114 may include a proximity sensor which is configured to sense the existence of a nearby object when no physical contact exists. The sensor component 1114 may further include a light sensor such as a CMOS or CCD image sensor, for using in imaging applications. In some embodiments, the sensor component 1114 may further include an acceleration sensor, a gyro sensor, a magnetic sensor, a pressure sensor, or a temperature sensor.

The communication component 1116 is configured to facilitate communicating between the apparatus 1100 and other devices in wired or wireless manner. The apparatus 1100 may be connected to wireless network based on communication standard such as wireless fidelity (Wi-Fi), 2G or 3G or their combinations. In an exemplary embodiment, the communication component 1116 receives, by means of a broadcast channel, a broadcast signal or broadcast-related information from an external broadcast management system. In an exemplary embodiment, the communication component 1116 further includes a near field communication (NFC) module to promote short-range communication. For example, the NFC module may be achieved based on radio frequency identification (RFID) technology, infrared data association (IrDA) technology, ultra-wide bandwidth (UWB) technology, Bluetooth (BT) technology and other technologies.

In exemplary embodiments, the apparatus 1100 may be achieved by one or more of application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components for executing the method above.

In exemplary embodiments, a non-transitory computer-readable storage medium including an instruction is also provided, for example, the memory 1104 including the instruction. The instruction may be executed by the processor 1120 of the apparatus 1100 to achieve the above method. For example, the non-transitory computer-readable storage medium may be a ROM, a random access memory (RAM), a CD-ROM, a magnetic tape, a floppy disk and optical data storage device, etc.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

The inventive method may comprise all features described in relation to the inventive device and vise versa.

## Claims

1. A video processing method, comprising:
receiving (S101, S301) multiple channels of video image individually sent from multiple mobile terminals;
displaying (S102) the multiple channels of video image;
acquiring (S103, S304) a selection instruction input by a user, the selection instruction carrying an identifier of a target video image, the target video image comprising at least one of the multiple channels of video image; and
transmitting (S104, S305) the target video image to another terminal.

2. The video processing method as claimed in claim 1, wherein, prior to the displaying the multiple channels of video image, the method further comprises:
collecting (S302) local video image; and
the displaying the multiple channels of video image comprises:
displaying (S303) the local video image and the multiple channels of video image.

3. The video processing method as claimed in claim 1 or 2, wherein, when the target video image comprises two or more of the multiple channels of video image, the transmitting the target video image to another terminal comprises:
performing superposing or splicing process on the two or more of the multiple channels of video image in the target video image and transmitting obtained video image to the another terminal.

4. The video processing method as claimed in any one of claims 1-3, further comprising:
acquiring a switching instruction input by the user; and
transmitting (S105) switched target video image to the another terminal.

5. The video processing method as claimed in claim 4, wherein any of the selection instruction and the switching instruction is a voice control instruction.

6. The video processing method as claimed in claim 4 or 5, further comprising:
receiving (S501) multiple channels of audio information individually sent from the multiple mobile terminals;
smoothing (S502) the multiple channels of audio information to obtain target audio information; and
transmitting (S503) the target audio information to the another terminal.

7. A video processing device, comprising:
a first receiving module (71) configured to receive multiple channels of video image individually sent from multiple mobile terminals;
a displaying module (72) configured to display the multiple channels of video image received by the first receiving module;
an acquiring module (73) configured to acquire a selection instruction input by a user, the selection instruction carrying an identifier of a target video image, the target video image comprising at least one of the multiple channels of video image displayed by the displaying module; and
a first transmitting module (74) configured to transmit the target video image to another terminal.

8. The video processing device as claimed in claim 7, further comprising:
a collecting module (75) configured to collect local video image before displaying the multiple channels of video image at the displaying module; and
wherein the displaying module is configured to display the local video image and the multiple channels of video image.

9. The video processing device as claimed in claim 7 or 8, wherein, when the target video image comprises two or more of the multiple channels of video image, the first transmitting module is configured to:
perform superposing or splicing process on the two or more of the multiple channels of video image in the target video image and transmit obtained video image to the another terminal.

10. The video processing device as claimed in any one claim 7-9, further comprising:
an acquiring and transmitting module (76) configured to acquire a switching instruction input by the user and transmit switched target video image to the another terminal.

11. The video processing device as claimed in claim 10, wherein any of the selection instruction and the switching instruction is a voice control instruction.

12. The video processing device as claimed in claim 10 or 11, further comprising:
a second receiving module (77) configured to receive multiple channels of audio information individually sent from the multiple mobile terminals;
a processing module (78) configured to smooth the multiple channels of audio information received by the second receiving module to obtain target audio information; and
a second transmitting module (79) configured to transmit the target audio information obtained by the processing module to the another terminal.

13. A program product having stored therein instructions that, when executed by one or more processors of a mobile terminal, causes the mobile terminal to perform:
receiving (S101, S301) multiple channels of video image individually sent from multiple mobile terminals;
displaying (S102) the multiple channels of video image;
acquiring (S103, S304) a selection instruction input by a user, the selection instruction carrying an identifier of a target video image, the target video image comprising at least one of the multiple channels of video image; and
transmitting (S104, S305) the target video image to another terminal.

14. A computer program, which when executing on a processor, performs a method according to any one of claims 1 to 6.
